# EUROPEAN PATENT APPLICATION

(11) **EP 3 543 128 A1**
(43) Date of publication of application: **25.09.2019**
(21) Application number: 19163848.5
(22) Date of filing: 19.03.2019
(51) Int. Cl.: B64D 11/06, B60R 7/00

(54) **STORAGE POCKET**

(30) Priority: 20.03.2018 GB 201804413
(71) Applicant: MIRUS Aircraft Seating Ltd., Hingham, Norfolk NR9 4LF (GB)
(72) Inventor: HALL, Phil, Hingham, Norfolk NR9 4LF (GB)
(74) Representative: Haseltine Lake Kempner LLP

(57) **Abstract**

An aircraft seat comprising a storage pocket provided on a rearward facing surface of the seat, the storage pocket comprising a storage portion which is detachably mounted to the seat in order to form the storage pocket, wherein the storage portion is formed of a flexible and/or deformable material, and has a primary access opening in an upper region of the storage portion, and a secondary access opening at a position below the primary opening, the primary and secondary access openings allowing items to be passed into an interior enclosure of the storage pocket.

## Description

The present application relates to a storage portion for a passenger seat. Particularly, although not exclusively, the present application relates to a storage portion which is intended to form a storage pocket or compartment in conjunction with a surface of a vehicle seat such as an aircraft seat. The present application also relates to an aircraft seat having a storage pocket.

### Background

Many passenger seats that are installed in vehicles such as aircraft, automobiles or trains are provided with a pocket or compartment for the storage of e.g. literature, games, food and drink items, spectacles and portable electronic devices. In a typical arrangement the storage pocket is provided on the rear surface of a first seat in order to be accessible to a passenger occupying a second seat of the vehicle which is located behind the first seat and is spaced therefrom.

In the case of storage pockets that are intended for use on an aircraft seat, it is known for the storage pocket, or at least the portion of the storage pocket that forms a rearward facing surface of the seat, to be made from high strength, rigid plastic. This, in part, is for compliance with legislation concerning the installation of seats into an aircraft which seeks to protect occupants from head injury in the event of an impact with the seat in front. As will be appreciated, aircraft seats are typically arranged to define a plurality of rows with a particular spacing or distance between the rearward facing surface of a first seat and a second seat directly behind.

Specifically, there is legislation which states that a potential impact region of a rearward facing part of a seat must be strong enough to stay intact and/or not shatter during an impact event. As a consequence, it is known for storage pockets which are provided at an upper rearward facing region of an aircraft seat - i.e. the region that extends from the top of the seat and comprises the upper third or upper half of the back surface of seat and which thus form at least a part of the potential impact region of the seat - to be formed of rigid/hard plastic.

However, although the storage portion may be strong enough to withstand forces arising as a result of impact with a passenger who is occupying the seat behind, significant injury including head trauma may be suffered by the passenger. This problem is exacerbated in aircraft seating arrangements where the spacing between adjacent rows of aircraft seats is kept to a minimum.

Furthermore, rigid or inflexible storage pockets have been shown to cause damage to items, particularly literature items, which are stowed in the pocket and which may collide with the hard edges of the pocket as the item is placed into the storage pocket.

The present examples are concerned with improving the design of a storage portion which is intended to be mounted to an upper rearward-facing portion of a vehicle seat. Embodiments of the present invention are particularly concerned with a storage portion which is intended to be provided at an upper rearward facing portion of an aircraft seat.

### Summary of Invention

According to a first aspect of the present invention there is provided an aircraft seat comprising a storage pocket provided on a rearward facing surface of the seat, the storage pocket comprising a storage portion which is detachably mounted to the seat in order to form the storage pocket, wherein the storage portion is formed of a flexible and/or deformable material.

The storage portion may be formed of a rubber-like material or elastomer. According to one or more examples the storage portion is formed of a silicone, or a silicone-type, material. Thus, the storage portion may be formed of silicone rubber. The storage portion may be formed of a material having a shore hardness which is between 50A and 60D, preferably between 60A and 100A, more preferably between 80A and 98A. The shore hardness is selected having regard for the desire for the storage portion to be flexible and/or deformable, whilst also being able to retain its shape.

The storage portion may comprise an attachment mechanism for attaching the storage portion to the seat. For example, the attachment mechanism may comprise a plurality of mounting pins which are provided along one or more edges of the storage portion. The pins may be flexible. For example the pins may be formed of rubber such as silicone rubber, or from flexible polymer material.

The aircraft seat may comprise a plurality of recesses such as holes or blind bores which are each configured to receive a cooperating mounting pin.

The pins may be formed with an enlarged portion which is larger in diameter than the recess, so that when the pin has been pushed through the recess in the seat and into a corresponding recess in the back of the seat, it recovers its original shape, thereby holding the pin in place and securing the storage pocket to the seat back.

If the pins are made of flexible material, they do not present a hazard to passengers in the seat to which the storage pocket is fixed or in the seat behind, in the event of a collision.

The storage pocket may comprise a primary opening towards an upper region of the storage pocket for passing items into an interior enclosure of the storage pocket. The primary opening may be a literature opening and may, for example, be at least 210 mm wide, so that it can accommodate an A4 note pad. It may be as wide as the storage pocket, so the width may typically be in the range of 200 mm to 300mm. The storage pocket may also comprise a secondary opening at a position below the primary opening. The secondary opening is also for passing items into the interior enclosure of the storage pocket and also allows a passenger and flight crew to view what is in the storage pocket.

The secondary opening may be elongate. For example, the secondary opening may be 50 mm to 300 mm wide and 10 mm to 75 mm high.

The storage portion may comprise a back portion. The secondary opening may be formed in the back portion. The storage portion may comprise first and second side portions which extend in a direction having a component which is orthogonal with respect to the back portion. The storage portion may comprise a base portion which extends in a direction having a component which is orthogonal with respect to the back portion. The base portion may comprise at least one tertiary opening for allowing e.g. debris to fall through the pocket, for example, during cleaning of the storage pocket. The or each tertiary opening may be at least 10 mm wide.

According to one or more examples, the storage portion exhibits a single piece construction. The storage portion may be formed of a single piece of moulded material. The material may be an elastomer or rubber-like material, such as silicone or silicone-rubber.

Features of any given aspect may be combined with the features of any other aspect and the various features described herein may be implemented in any combination in a given embodiment.

### Brief Description of Preferred Embodiments

For a better understanding of the present invention, and to show how the same may be carried into effect, reference will now be made by way of example, in which:
Figure 1a illustrates a front elevational view of a storage portion according to one example;
Figure 1b illustrates a rear elevational view of a flexible storage portion according to one example;
Figure 2 an aircraft seat according to an example of the present invention; and
Figure 3 illustrates a side view of an aircraft seat according to one example.

### Detailed Description

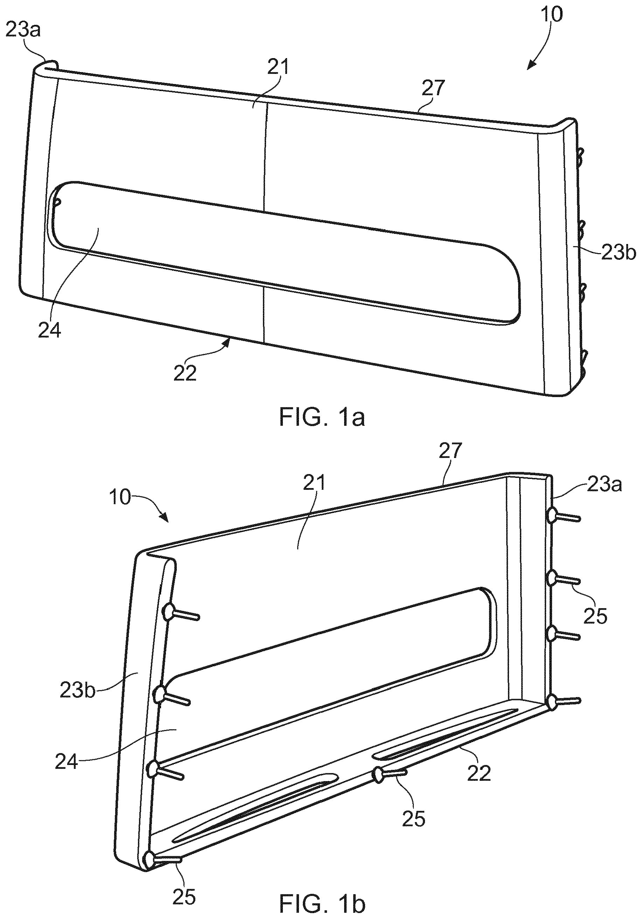

**Figure 1a** illustrates a front elevational view of a storage portion 10 according to a first example of the present invention. The storage portion 10 comprises a back portion 21, a base portion 22, a first side portion 23a and a second side portion 23b. The storage portion is formed of a flexible and/or deformable material. For example, the storage portion may be formed of an elastomer such as a silicone material or a silicone rubber. The material forming the storage portion preferably exhibits a shore hardness of between 60A and 98A. The storage portion may be conveniently formed from a single piece of silicone, silicone-like material or other material having the required properties. The storage portion may be moulded. Thus, the storage portion is advantageously flexible and/or deformable.

The back portion 21 of the storage portion defines an outer, generally planar, surface of the storage portion. Optionally, and as illustrated in this particular example, the back portion may be provided with a secondary aperture 24 which extends through the back portion between the outer and inner surfaces of the back portion, provides access to an interior of the storage portion and allows the interior of the storage portion to be viewed from outside the storage portion. The secondary aperture may be at least 10 mm high and at least 50 mm wide, so that articles such as spectacles, pens, packs of tissues and sweets can be placed in the storage portion through the second aperture. The second aperture may be higher and wider. For example it may be from 10 to 75 mm high and from 50 to 300mm wide.

**Figure 1b** illustrates a rear elevational view of the flexible storage portion 10. As will be seen more clearly from **Figure 1b**, the storage portion is provided with an attachment mechanism for attaching the storage portion to an aircraft seat. Thus, the storage portion is configured to form a storage pocket in conjunction with a surface of the aircraft seat. In the illustrated example the attachment mechanism comprises a plurality of mounting pins 25. The mounting pins may be formed from flexible material such as rubber or polymer, may project from the storage portion and may be configured to be received by, or to mate with, complimentary mounting recesses provided on an aircraft seat. In this example the mounting pins are provided on the side portions 23a and 23b and also on the base portion 22. The mounting portions are arranged to project in a direction having a component which extends orthogonally with respect to the back portion. No mounting portions may be provided along a top edge 26 of the storage portion.

Other attachment mechanisms are envisaged within the context of the present invention including, for example, a plurality of openings provided at or near a perimeter edge of the storage portion which are each sized to receive a protrusion correspondingly provided on the vehicle seat, or to align with holes formed in the seat and be connected by fixings such as rivets, bolts or screws.

As illustrated in **Figure 1b**, the base portion 22 may be provided with one or more tertiary apertures. This may advantageously allow smaller items or debris to fall through the storage pocket in use. This may help the storage pocket to stay relatively clean and helps prevent smaller items from being forgotten or "lost" within the pocket. Furthermore, when the storage pocket is washed the tertiary opening allows airflow through the pocket to speed up the drying process.

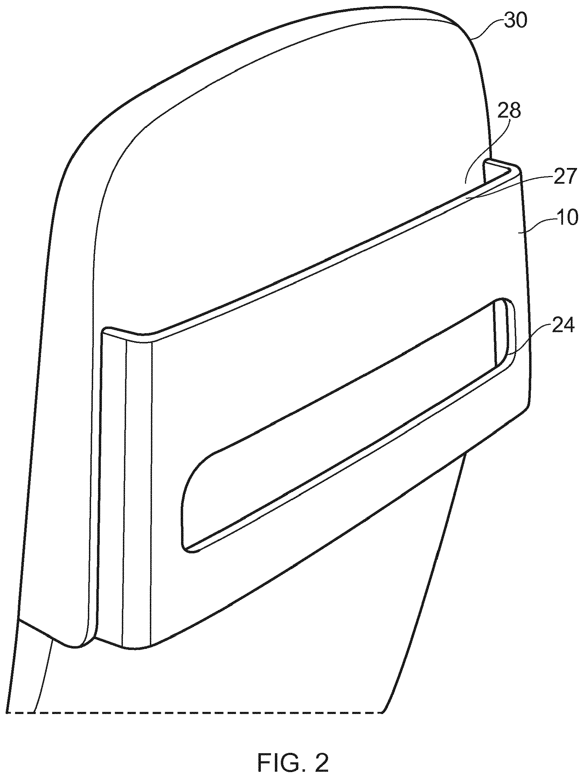

**Figure 2** illustrates an aircraft seat according to an example of the present invention. Thus, as illustrated in Figure 2 a flexible storage portion, which may be the flexible storage portion 10 illustrated in Figure 1a and 1b, has been mounted to the back of an aircraft seat 30. In this example the seat is for an aircraft. Specifically, the storage portion 10 is mounted to an upper region of the rearward facing portion of the seat in order to form a storage pocket in conjunction with the surface region of the seat that forms an enclosure with the storage portion 10. The top edge 27 of the storage portion is not attached to the seat, thereby defining a primary opening 28 through which articles, such as literature or electronic devices, may be placed within the pocket. The secondary aperture 24 conveniently allows smaller items like spectacles, pens, packs of tissues and sweets to be placed into the storage pocket, allowing the content of the pocket to be visualised, thus reducing the risk that items are left in the pocket by a passenger, and also allows the air stewards to have sight of the pocket contents.

According to one or more examples the storage portion is detachably mounted to the seat 40 along a plurality of mounting edges. As illustrated in **Figure 1b**, the mounting edges may comprise the terminating portions of the side portions 23a and 23b and the base portion 22. According to one or more examples, the mounting edges of the storage portion are at or near a perimeter of the storage portion.

According to one or more examples of the present invention, the storage portion forms a storage pocket in conjunction with a region of an outer surface of a vehicle seat. The region of the outer surface of the seat effectively forms an interior surface of the storage pocket. The storage portion 10 can be considered to define an outer surface of the storage pocket and another interior surface of the storage pocket.

In an alternative embodiment, not illustrated, the storage pocket is a self-contained unit moulded as a single unit with a front wall, a back wall, side walls and a base wall.

Following attachment of the storage portion to an aircraft seat, the resulting storage pocket preferably comprises a primary opening 28 to allow items to be loaded into the pocket. For example, as illustrated in **Figure 2**, the storage portion may not be attached to the seat in the vicinity of the top edge 27 or top perimeter section of the storage portion, thereby defining the primary opening of the resultant pocket. The primary opening is optionally provided to allow items to be top loaded into the pocket.

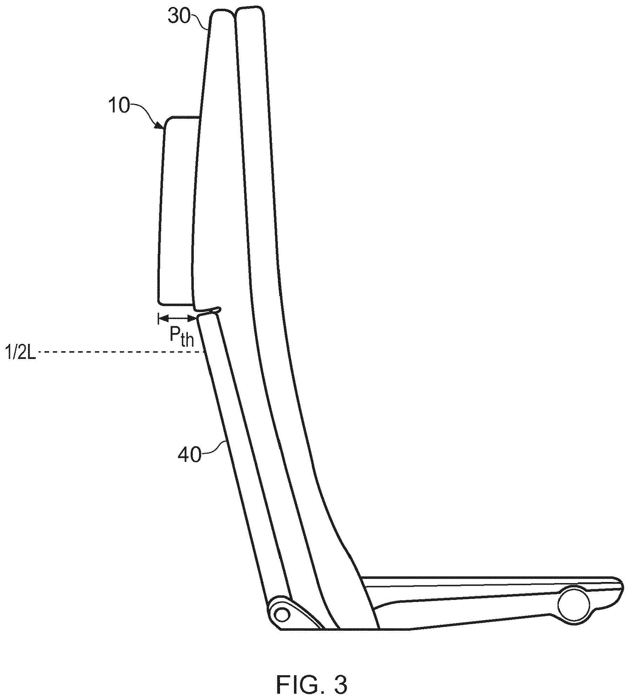

The first and second interior surfaces of the storage pocket define an enclosure within which one or more items may be placed. It will be appreciated that the shape and size of the enclosure will depend at least partly on the design of the storage portion. For example, the storage portion illustrated in **Figures 1a** and **1b** comprises side and base portions which extend in use between the first and second interior surfaces and thus define a pocket thickness Pₜₕ. This is illustrated more clearly in **Figure 3** which illustrates a side view of an aircraft seat according to one example.

Other designs are envisaged within the context of the present invention in which, for example, the storage portion is configured to be more closely conformal with the outer surface of the seat. As a consequence of the flexible and/or deformable properties of the storage portion, which allows the storage portion to deform in order to accommodate a given item, the storage portion may be configured to have a lesser thickness than rigid storage portions having an equivalent capacity. Thus, examples are envisaged in which the storage portion comprises only a back portion and does not comprise side portions or base portions.

According to one or more example the mounting mechanism is configured to allow the storage portion to be readily detached, thereby allowing replacement and/or cleaning of the storage portion. For example, where the mounting mechanism comprises flexible pins, the pins can be withdrawn from corresponding fixing holes formed in the seat back by pulling firmly on the storage portion.

The opacity and/or colour of the flexible storage portion, which may preferably be formed of silicone material, may be customised. According to one or more examples which utilise a silicone rubber material for the storage portion, one or more additives may be incorporated into the material which impart anti-bacterial, anti-microbial or anti-mould properties to the material.

According to one or more example the storage portion is sized relative to the dimensions of the aircraft seat. Thus, the storage portion may be mounted at or within a few centimetres of the edge of the seat so as to extend across the width of the rearward facing surface of the seat. This advantageously allows the storage capacity of the storage pocket to be maximised with respect to the size of the seat. For example, the storage portion may be configured to allow an A4-sized literature item to be stowed entirely within the storage pocket in a landscape orientation. In one example the storage portion is configured such that the edges of the storage portion are substantially flush with the side edges of the seat.

According to one or more embodiments at least a part of the storage portion is provided within a potential impact region of the seat - i.e. a region where a passenger occupying a seat directly behind the seat will tend to impact when exposed to a force which causes the occupant to be thrust towards the seat. As illustrated in **Figure 3**, the storage pocket may be formed above a seat-tray region 40 of the seat. According to one or more examples the storage pocket is provided so as to extend at least partially into the upper third of the seat back length L. According to a further example the storage pocket is provided entirely in the upper half of the seat back length L.

Examples described herein provide a storage portion which exhibits a number of advantages over previously considered storage portions which are made from rigid plastic. Importantly, the softness and/or compliance of the storage portion offers improved protection against trauma or injury to a passenger who may be subjected to forces which cause them to impact the seat in front.

Furthermore, the flexibility and/or deformability of the storage portion allows the storage portion to deform in order to accommodate one or more items, thus giving the potential for a small amount of "additional" or flexible capacity within the storage pocket. Furthermore, any item that exerts a force causing a slight deformation of the storage portion will experience a degree of grip, or counter force, to thereby hold any such item securely within the storage pocket. In addition, items placed within the storage pocket are less likely to be damaged as a result of contact with the flexible storage portion.

Consequently, as the storage pocket is made from flexible material, a larger item such as a book, which is slightly too big to fit through primary or secondary openings can still be eased into the storage pocket because the sides of the primary or secondary opening will flex slightly. Furthermore, an electronic device can be inserted into the primary or secondary opening, such that it is gripped by the sides of the opening and can be held in this way so that the screen can be viewed by the passenger hands free.

The hardness level of the material is preferably selected such that the deformable storage portion substantially retains its shape and/or is resistant to sag over time.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

## Claims

1. An aircraft seat comprising a storage pocket provided on a rearward facing surface of the seat, the storage pocket comprising a storage portion which is detachably mounted to the seat in order to form the storage pocket, wherein the storage portion is formed of a flexible and/or deformable material, and has a primary access opening in an upper region of the storage portion, and a secondary access opening at a position below the primary opening, the primary and secondary access openings allowing items to be passed into an interior enclosure of the storage pocket.

2. An aircraft seat as claimed in claim 1, wherein the storage portion is formed of a silicone, or silicone-type, material.

3. An aircraft seat as claimed in claim 1 or 2 wherein the storage portion exhibits a Shore hardness of between 60A and 98A.

4. An aircraft seat as claimed in any preceding claim, wherein the storage portion comprises an attachment mechanism for attaching the storage portion to the seat.

5. An aircraft seat as claimed in claim 4, wherein the attachment mechanism comprises a plurality of mounting pins which are provided along one or more edges of the storage portion.

6. An aircraft seat as claimed in claim 5, wherein the aircraft seat comprises a plurality of recesses configured to cooperate with the plurality of mounting pins.

7. An aircraft seat as claimed in any preceding claim, wherein the primary access opening is at least 210 mm. wide.

8. An aircraft seat as claimed in any preceding claim, wherein a base portion of the storage portion comprises at least one tertiary opening.

9. A storage portion for an aircraft seat, the storage portion being formed of a flexible and/or deformable material, and having a primary access opening in an upper region of the storage portion, and a secondary access opening at a position below the primary opening, the primary and secondary access openings allowing items to be passed into an interior enclosure of the storage pocket.

10. A storage portion as claimed in claim 9, formed of a silicone or other elastomer material.

11. A storage portion as claimed in claim 9 or 10, wherein the storage portion is a single piece construction.

12. A storage portion as claimed in any one of claims 9 to 11, wherein the storage portion comprises an attachment mechanism for attaching the storage portion to a vehicle seat.

13. A storage portion as claimed in claim 12, wherein the attachment mechanism comprises a plurality of flexible mounting pins which are provided along one or more edges of the storage portion.

14. A storage portion as claimed in any one of claims 9 to 13 wherein the storage portion comprises a back portion, and the secondary access opening is formed in the back portion.

15. A storage portion as claimed in claim 14, wherein the storage portion comprises first and second side portions which extend in a direction having a component which is substantially orthogonal with respect to the back portion, and a base portion which extends in a direction having a component which is substantially orthogonal with respect to the back portion, and wherein the base portion comprises at least one tertiary opening.
